# EUROPEAN PATENT APPLICATION

(11) **EP 4 601 285 A1**
(43) Date of publication of application: **13.08.2025**
(21) Application number: 23940931.1
(22) Date of filing: 18.12.2023
(51) Int. Cl.: H04N 7/14

(54) **CLOSE-UP PICTURE DETERMINATION METHOD AND APPARATUS, DEVICE, AND STORAGE MEDIUM**

(71) Applicant: Guangzhou Shiyuan Electronic Technology Company Limited, Guangzhou, Guangdong 510530 (CN); Guangzhou Shikun Electronics Co., Ltd, Guangzhou, Guangdong 510700 (CN)
(72) Inventor: LIN, Qijun, Guangzhou Guangdong 510530 (CN); GUO, Zhiqiang, Guangzhou Guangdong 510530 (CN); WANG, Haidong, Guangzhou Guangdong 510530 (CN)
(74) Representative: Grünecker Patent- und Rechtsanwälte PartG mbB
(86) International application number: PCT/CN2023/139638
(87) International publication number: WO 2025/129411

(57) **Abstract**

Embodiments of the present disclosure disclose a method apparatus, device for determining a close-up picture and storage medium. The method includes: recognizing a close-up box to which each head object in the current frame of video stream data belongs, where each close-up box corresponds to at least one principal object, and the principal object is the head object that has been enclosed by the corresponding close-up box; selecting a close-up box from the close-up boxes as the current close-up box; determining that there is a second head object capable of being added to the current close-up box, determining the second head object as the principal object corresponding to the current close-up box, and deleting the close-up box constructed for the second head object; selecting a second close-up box to update the current close-up box as the selected second close-up box, and returning to perform an operation of when there is a second head object capable of being added to the current close-up box, until all current close-up boxes are traversed; and displaying the close-up picture of each close-up box in the video stream data. This method can solve a technical problem of repeatedly appearing close participants in multiple close-up boxes during close-up construction of video communication participants.

## Description

### FIELD

The present disclosure relates to the field of video call technology, and in particular to a method, apparatus, device for determining a close-up picture, and storage medium.

### BACKGROUND

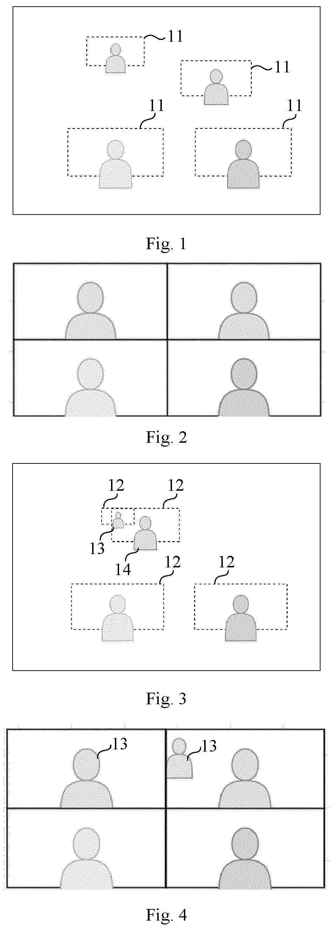

In a scenario of using an electronic device for video communication (also known as video calls), in order to ensure that each participant in the video picture is clearly seen, the electronic device will individually construct pictures for each participant and then integrate these constructions together for display. For example, Fig. 1 is the first schematic diagram of a video communication scene in related technology. Referring to Fig. 1, there are four participants in the current video picture, and the electronic device has separately composed each of the four participants. The pictures in each construction may refer to a picture selected by a close-up box 11 containing each participant in Fig. 1. Afterwards, the electronic device integrates and displays a picture in four close-up boxes 11. Fig. 2 is a first schematic diagram of an integrated screen in a video communication scenario in related technologies. Referring to Fig. 2, it shows the picture in four close-up boxes 11 in Fig. 1, so that users of the electronic device can clearly observe various participants in the video communication.

However, in a process of video communication, there may be a situation where two participants are very close to each other. In this case, when one participant is individually composed, the construction picture will include the other participant who is very close to each other, causing the other participant to appear in both their own construction picture and the construction picture of the participant who is closer to each other. For example, Fig. 3 is a second schematic diagram of a video picture in a video communication scenario in related technology. Referring to Fig. 3, there are four participants in the current video picture, and the electronic device has separately composed each of the four participants. The picture in each construction may refer to pictures in the close-up box 12 containing each participant in Fig. 3. Based on Fig. 3, it may be seen that a participant 13 is close to a participant 14, causing the participant 13 to appear in a close-up box 12 of the participant 14. Then, when the electronic device integrates and displays the pictures in the four close-up boxes 12, the participant 13 will repeatedly appear. Fig. 4 is the second schematic diagram of the integrated screen in the video communication scenario in related technology, referring to Fig. 4, it displays pictures in the four close-up boxes 12 in Fig. 3. Based on Fig. 4, it may be seen that the participant 13 appears in two close-up pictures, which affects the viewing experience of users and communication efficiency in video communication.

### SUMMARY

Embodiments of the present disclosure provide a method, apparatus, device for determining a close-up picture and storage medium to solve a technical problem in the related art of repeatedly appearing close participants in multiple close-up boxes during close-up construction of video communication participants.

According to a first aspect of the present disclosure, a method for determining a close-up picture is provided, which includes:
recognizing a close-up box to which each head object in the current frame of video stream data belongs, where each close-up box corresponds to at least one principal object, and the principal object is determined as the head object that has been enclosed by the corresponding close-up box;
selecting a close-up box from the close-up boxes as the current close-up box;
when there is a second head object capable of being added to the current close-up box, determining the second head object as the principal object corresponding to the current close-up box, and deleting the close-up box constructed for the second head object;
selecting a second close-up box from the close-up boxes for taking it as the current close-up box, and returning to perform an operation of, when there is a second head object capable of being added to the current close-up box, determining the second head object as the principal object corresponding to the current close-up box, and deleting the close-up box constructed for the second head object until all current close-up boxes are traversed; and
displaying the close-up picture selected by each close-up box in the video stream data.

As mentioned above, by the technological means of recognizing a close-up box to which each head object in the current frame of video stream data belongs, where each close-up box corresponds to at least one principal object, and the principal object is the head object is determined as the head object that has been enclosed by the corresponding close-up box; afterwards, selecting a close-up box from the close-up boxes as the current close-up box; and when there is a second head object capable of being added to the current close-up box, determining the second head object as the principal object corresponding to the current close-up box, and deleting the close-up box to which the second head object belongs; selecting a second close-up box from the close-up boxes for taking it as the current close-up box, and continuing to determine whether there is the second head object that may be added in as the current close-up box until all close-up boxes are traversed; displaying the close-up picture selected by each close-up box in the video stream data, the technical problem of repeatedly appearing close participants in multiple close-up boxes during close-up construction of video communication participants is solved. When a participant (i.e. head object) may be added to other close-up box, the close-up box of that participant is deleted, so that the participant only appears in a close-up box, avoiding the participant appearing in multiple close-up boxes as much as possible, and improving the communication efficiency of users in video communication.

On the basis of the above embodiment, when there is a second head object capable of being added to the current close-up box, determining the second head object as the principal object corresponding to the current close-up box, and deleting the close-up box constructed for the second head object includes:
judging whether the principal object in the current close-up box has changed;
if the principal object in the current close-up box changes, then selecting the principal object with the largest area in the current close-up box as the current principal object, and deleting the current close-up box;
reconstructing a close-up box for the current principal object as the current close-up box; and
finding a second head object capable of being added to the current close-up box, determining the second head object as the principal object corresponding to the current close-up box, and deleting the close-up box constructed for the second head object.

As mentioned above, by judging whether the principal object in the current close-up box has changed; and when it has changed, finding the current principal object again and constructing the current close-up box, afterwards, finding the head object capable of being added to the current close-up box, and adding the head object to the current close-up box, it is possible to ensure that when the principal object in the close-up box changes, applicable close-up boxes are reconstructed for each principal object, thereby ensuring the rationality of the layout of the principal objects in the close-up picture.

On the basis of the above embodiments, the finding a second head object capable of being added to the current close-up box, determining the second head object as the principal object corresponding to the current close-up box, and deleting the close-up box constructed for the second head object includes:
constructing a stable box centered on the current principal object;
moving the stable box and finding a second head object capable of being added to the current close-up box during the movement, where the second head object capable of being added to the current close-up box intersects with the stable box at corresponding time during the movement;
determining the found second head object as the principal objects corresponding to the current close-up box, and deleting the close-up box constructed for the second head object; and
selecting the principal object with the largest area in the current close-up box for taking it as the current principal object, and returning to perform an operation of constructing a stable box centered on the current principal object until no other head object capable of being added to the current close-up box is found.

As mentioned above, by constructing the stable box and moving the stable box, finding the head object capable of being added to the current close-up box, it is possible to ensure that all the found head objects are located in the surrounding region of the current principal object, that is, close to the current principal object, ensuring the rationality of the found head objects. In addition, by updating the principal object with the largest area as the current principal object, it is also to ensure that the surrounding region of the principal object with the largest area is used as a reference when searching for the head object, further ensuring a more reasonable layout of the principal objects in the close-up picture.

On the basis of the above embodiment, after judging whether the principal object in the current close-up box has changed, the method further includes:
if the principal object in the current close-up box has not changed, then determining whether there is a second head object in the current close-up box;
If there is a second head object, then determining the second head object as the principal object corresponding to the current close-up box, and deleting the close-up box constructed for the second head object, and executing the operation of selecting a second close-up box from the close-up boxes for taking it as the current close-up box; and
If there is no other head object, then executing the operation of selecting another close-up box from the close-up boxes and taking it the current close-up box.

As mentioned above, by when the principal object in the current close-up box has not changed, further searching for a second head object in the current close-up box, it is possible to avoid missing head objects capable of being added to the current close-up box.

On the basis of the above embodiment, if there is a second head object, then determining the second head object as the principal object corresponding to the current close-up box, and deleting the close-up box constructed for the second head object includes:

If there is a second head object, then selecting the principal object with the largest area in the current close-up box and updating as the current principal object;
constructing a stable box centered on the current principal object;
moving the stable box and finding a second head object capable of being added to the current close-up box during the movement, where the second head object capable of being added to the current close-up box intersect with the stable box at corresponding time during the movement;
determining the found second head object as the principal object corresponding to the current close-up box, and deleting the close-up box constructed for the second head object; and
selecting the principal object with the largest area in the current close-up box and updating as the current principal object, and returning to perform an operation of constructing a stable box centered on the current principal object, until no other head object capable of being added to the current close-up box is found.

As mentioned above, it is possible to avoid missing the head object capable of being added to the current close-up box, and ensure the rationality of finding the head object.

On the basis of the above embodiment, during the movement of the stable box, the corresponding current principal object remains its position unchanged and always stays in the stable box.

As mentioned above, regardless of which direction the stable box moves, it possible to ensure that the current principal object does not exceed the stable box. At this point, the region covered by the stable box during its movement may be considered as the surrounding region of the current principal object, thereby ensuring the accuracy of a second head object found based on the stable box.

On the basis of the above embodiment, a size of the stable box is determined by a display size of the corresponding current principal object in the current frame picture.

As mentioned above, as long as the display size of the current principal object does not change, even if an aspect ratio of the close-up box changes, the size of the corresponding stable box will not change. Then, when the head object is relatively stable in the video stream data (i.e. does not move or moves very little), the head object found based on the stable box is also relatively fixed, which can reduce the problem of close-up picture shake caused by changes in the aspect ratio of the close-up box.

On the basis of the above embodiment, the moving the stable box and finding a second head object capable of being added to the current close-up box during the movement includes:
moving the stable box and finding a second head object located within the current close-up box that intersects with the stable box during the movement;
determining the smallest rectangular region containing the found second head object and the principal object in the current close-up box; and
when the width and height of the smallest rectangular region are both less than the width and height of the stable box, determining that the found second head object is capable of being added to the current close-up box.

As mentioned above, when finding the head object based on the stable box, through the result of comparing the width and height of the smallest rectangular region containing the head object and each principal object in the current close-up box with the width and height of the stable box, it is further determined whether the found head object capable of being added to the current close-up box, which ensures that the head objects added to the current close-up box are close to each principal object, and further ensures a more reasonable layout of the principal objects in the close-up picture.

On the basis of the above embodiment, the judging whether the principal object in the current close-up box has changed includes:
judging whether the number of principal objects in the current close-up box has changed; or,
judging whether the area change range of the principal object with the largest area in the current close-up box exceeds an area threshold; or,
judging whether there is a principal object in the current close-up box exceeding the stable box created for the principal object with the largest area.

As mentioned above, it is possible to ensure valid recognition of changes in the principal object.

On the basis of the above embodiments, the displaying the close-up picture selected by each close-up box in the video stream data includes:
when there are multiple principal objects corresponding to the close-up box, creating a corresponding rectangular region for the close-up box, where the rectangular region is the smallest rectangular region containing all the principal objects within the corresponding close-up box, creating a virtual object centered on a center point of the rectangular region, where the area of the virtual object is equal to the area of the principal object with the largest area within the corresponding close-up box, updating a selection position of the close-up box in the video stream data based on the virtual object, so that the updated close-up box is centered on the virtual object;
when the number of the principal object corresponding to the close-up box is one, updating the selection position of the close-up box in the video stream data centered on the principal object; and
displaying the selected close-up picture of respective updated close-up boxes in the video stream data.

As mentioned above, when there are multiple principal objects corresponding to the close-up box, the selection position of the close-up box is adjusted by constructing the virtual object, which can ensure a more reasonable distribution of each principal object in the close-up picture, without highlighting a particular principal object as center.

On the basis of the above embodiment, the recognizing a close-up box to which each head object in the current frame of video stream data belongs includes:
acquiring a latest close-up box recognition result obtained for the video stream data; and
determining the close-up box to which each head object in the current frame of the video stream data belongs based on the close-up box recognition result;
after all the current close-up boxes are traversed, the method further includes:
updating the close-up box recognition result.

According to a second aspect of the present disclosure, an apparatus for determining a close-up picture is further provided, which includes:
a close-up box recognizing unit, configured to recognize a close-up box to which each head object in the current frame of video stream data belongs, where each close-up box corresponds to at least one principal object, and the principal object is determined as the head object that has been enclosed by the corresponding close-up box;
a close-up box selecting unit, configured to select a close-up box from the close-up boxes as the current close-up box;
a first object determining unit, configured to, when there is a second head object capable of being added to the current close-up box, determine the second head object as the principal object corresponding to the current close-up box, and delete the close-up box constructed for the second head object;
a first close-up box updating unit, configured to select a second close-up box from the close-up boxes and update the current close-up box as the second close-up box, and return to perform an operation of, when there is a second head object capable of being added to the current close-up box, determining the second head object as the principal object corresponding to the current close-up box, and deleting the close-up box constructed for the second head object until all current close-up boxes are traversed; and
a close-up displaying unit, configured to display the close-up picture selected by each close-up box in the video stream data.

According to a third aspect of the present disclosure, a device for determining a close-up picture is further provided, which includes:
one or more processors;
a display screen configured to display close-up pictures;
a memory configured to store one or more programs;
the one or more programs, when executed by the one or more processors, cause the one or more processors to perform the method for determining close-up picture as described in the first aspect.

According to a fourth aspect of the present disclosure, a computer-readable storage medium is further provided, on which a computer program is stored, when the program is executed, the method for determining close-up picture as described in the first aspect is performed.

The beneficial effects of the apparatus, device for determining close-up picture and storage medium mentioned above can refer to the beneficial effects of the method for determining close-up picture.

### BRIEF DESCRIPTION OF THE DRAWINGS

Fig. 1 is a first schematic diagram of a video picture in a video communication scenario in related technology.
Fig. 2 is the first schematic diagram of an integrated picture in the video communication scenario in related technology.
Fig. 3 is a second schematic diagram of a video picture in a video communication scenario in related technology.
Fig. 4 is the second schematic diagram of an integrated picture in the video communication scenario in related technology.
Fig. 5 is a schematic diagram of a structure of a device for determining close-up picture according to an embodiment of the present disclosure.
Fig. 6 is a flowchart of a method for determining close-up picture according to one embodiment of the present disclosure.
Fig. 7 is a schematic diagram of a close-up picture arrangement according to an embodiment of the present disclosure.
Fig. 8 is a schematic diagram of another close-up picture arrangement according to an embodiment of the present disclosure.
Fig. 9 is a flowchart of another method for determining close-up picture according to an embodiment of the present disclosure.
Fig. 10 is a schematic diagram of a close-up picture and stable box according to an embodiment of the present disclosure.
Fig. 11 is a schematic diagram of another close-up picture and stable box according to an embodiment of the present disclosure.
Fig. 12 is a schematic diagram of a close-up box according to one embodiment of the present disclosure.
Fig. 13 is a schematic diagram of a virtual object according to one embodiment of the present disclosure.
Fig. 14 is a schematic diagram of another close-up box according to an embodiment of the present disclosure.
Fig. 15 is an example flowchart of a method for determining close-up picture according to one embodiment of the present disclosure.
Fig. 16 is a schematic diagram of a structure of an apparatus for determining close-up picture according to one embodiment of the present disclosure.

### DESCRIPTION OF THE PREFERRED EMBODIMENTS

The present disclosure will be further described in detail with reference to the accompanying drawings and embodiments. It should be understood that the specific embodiments described here are used to explain the present disclosure, rather than to limit the present disclosure. Additionally, it should be noted that for ease of description, only a portion related to the present disclosure is shown in the accompanying drawings, not all of the structure.

It should be noted that due to space limitations, this description of the present disclosure does not exhaustively list all optional embodiments. After reading this description of the present disclosure, those skilled in the art should be able to imagine that as long as the technical features do not contradict each other, any combination of technical features may constitute optional embodiments.

The following provides a detailed explanation of each embodiment.

Video communication should be understood as using the internet to achieve video calls, in order to create face-to-face communication between users in different locations. Video communication is widely used in daily communication scenarios, meeting scenarios, and teaching scenarios.

Currently, in order to enable users to clearly view the various participants participating in video communication, electronic devices used for video communication will individually construct pictures for each participant to obtain close-up pictures of each participant. When constructing pictures individually, a close-up box is created for each participant, for example, referring to the close-up boxes shown in Fig. 1 and Fig. 3, at this point, the close-up box should be understood as a rectangular region created by centering around the corresponding participant in the video picture, and the selected picture in the video picture may be considered as the close-up picture of the corresponding participant. When creating a close-up box, the aspect ratio of each close-up box is the same but the size may be different. The larger the area of the corresponding participant in the video picture, the larger the size of the close-up box needed to enclose the participant. The smaller the area of the participant in the video picture, the smaller the size of the close-up box needed to enclose the participant. Afterwards, the electronic device displays the close-up pictures in each close-up box in a certain arrangement, so that the user of the electronic device may clearly see each participant.

However, in a scenario of video communication, some participants are relatively close. In this case, a close-up box created for one participant will enclose another participant who is closer, and another participant also has a corresponding close-up box. At this time, another participant will appear in two close-up boxes, such as the participant 13 in Fig. 4, which affects the viewing experience and communication efficiency of users in video communication. Specifically, if a user is paying attention to the participant 13 during a video exchange and the participant 13 appears in both close-up pictures, the user may not know which close-up picture to focus on between the two while watching the video, and may miss speech contents during the video conference in hesitation; alternatively, if the user first discovers the participant 13 in the close-up picture in the upper right corner of Fig. 4 while watching the video, the user will pay attention to the participant 13 in the close-up picture in the upper right corner for a period of time. However, due to the low proportion of the participant 13 in the close-up picture, the user will struggle to watch the participant 13, which affects the efficiency of the video conference. It may be seen that the repeated appearance of participants in multiple close-up pictures will reduce the efficiency of video conferencing, and the probability of this situation occurring needs to be reduced.

Based on this, an embodiment of the present disclosure provides a method for determining close-up picture. The method for determining close-up picture can place multiple video communication participants who are close together into the same close-up picture, in order to avoid the situation where participants repeatedly appear in multiple close-up pictures as much as possible and reduce the probability of such a situation occurring.

An embodiment of the present disclosure provides a method for determining close-up picture that may be executed by a device for determining close-up picture. The device for determining close-up picture may be implemented through software and/or hardware, and may be composed of two or more physical entities, or a single physical entity. Currently, the device for determining close-up picture may be electronic devices such as interactive intelligent boards, tablets, laptops, etc. that may be used for video communication.

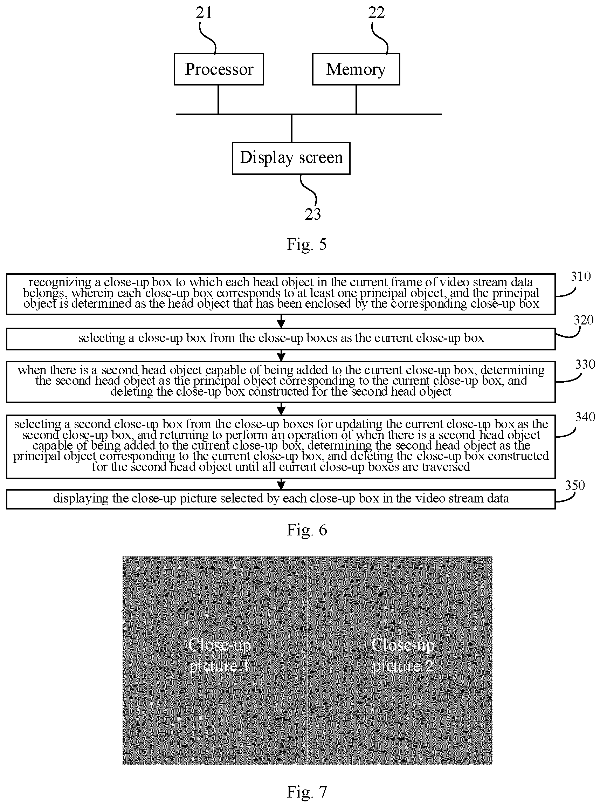

Fig. 5 is a schematic diagram of a structure of a device for determining close-up picture according to an embodiment of the present disclosure. Referring to Fig. 5, the device for determining close-up picture includes a processor 21, a memory 22, and a display screen 23. The processor 21, the memory 22, and the display screen 23 may be connected through a bus or other manners, as shown in Fig. 5 for example.

The number of processors 21 is one or more, and in Fig. 5, one processor 21 is taken as an example. The processor 11 may include a processing unit such as an application processor (AP), a graphics processing unit (GPU), and a central processing unit (CPU).

The memory 22, as a computer-readable storage medium, may be configured to store software programs, computer executable programs, and modules, such as the program instructions/modules corresponding to the method for determining close-up picture in the embodiments of the present disclosure. The memory 22 may mainly include a storage program region and a storage data region, the storage program region may store an operating system and at least one application program required for a function; the storage data region may store data created based on the use of the device determined by close-up pictures. In addition, the memory 22 may include high-speed random access memory, as well as non-volatile memory such as at least one disk storage device, flash memory device, or other non-volatile solid-state storage device. In some examples, the memory 22 may further include remote memories arranged relative to the processor 21, and these remote memories may be connected to the device for determining close-up picture through a network connection. Examples of the above networks include but are not limited to the Internet, enterprise intranet, local area network, mobile communication network and their combinations. It should be understood that when the processor 21 has storage functionality, the memory 22 and the processor 21 may also be integrated into one physical entity.

The number of the display screen 23 (also known as screens or displays) is one or more, and in Fig. 5, one display screen 23 is taken as an example. The display screen 23 may be a liquid crystal display screen, an LED display screen, an organic light-emitting diode (OLED) display screen, or a flexible light-emitting diode (FLED) display screen, etc., which the embodiments are not limited to. In addition, the display screen may be a straight face screen or a curved screen, which this embodiment of the present disclosure is not limited to. Based on the display screen 23, it is possible to determine a display function of the device for determining close-up picture. In an embodiment, the display screen 23 may further be integrated with touch functionality. At this time, the display screen 23 includes a display panel and a touch panel. The display panel is used to complete visual output. The touch panel may be a touch component that supports infrared touch, electromagnetic touch, capacitive touch, or resistive touch. The touch panel may transmit a detected touch operation to the processor 21 for subsequent processing, and the display panel may provide visual output related to the touch operation.

In addition, the device for determining close-up picture may further include one or more communication interfaces (not shown), through the communication interfaces, the device for determining close-up picture may communicate with other electronic devices, such as transmitting data required for video communication with other electronic devices. The type of communication interface is currently not limited.

The device for determining close-up picture may also include devices such as power supply, a speaker, a physical button, etc., which the embodiments are not limited to.

On the basis of the above hardware structure, the device for determining close-up picture supports at least one type of operating system, the operating system may be an operating system such as Android, Windows, Linux, etc.

The device for determining close-up picture may be equipped with at least one application under the operating system. The installed applications may be built-in applications of the operating system, applications downloaded from backend servers, or third-party devices. The device for determining close-up picture may achieve corresponding functions by running various applications. Currently, the device for determining close-up picture is equipped with at least an application for video communication and an application for implementing the current method for determining close-up picture. In practical applications, these two applications may also be integrated into one application.

Fig. 6 is a flowchart of a method for determining close-up picture according to one embodiment of the present disclosure. Referring to Fig. 6, when the device for determining close-up picture executes the method for determining close-up picture, the method for determining close-up picture specifically includes steps 310-350.

Step 310, recognizing a close-up box to which each head object in the current frame of video stream data belongs, where each close-up box corresponds to at least one principal object, and the principal object is determined as the head object that has been enclosed by the corresponding close-up box.

Video stream data should be understood as the video data currently used for video communication. Video stream data may be the data obtained by collecting the pictures of local participants with the device for determining close-up picture, or the data received by the device for determining close-up picture and sent remotely, containing the pictures of remote participants. The participants refer to those who participate in video communication. It should be understood that during video communication, the device for determining close-up picture receives real-time video stream data and obtains the video pictures for implementing video communication based on the video stream data. The video picture contains pictures of participants engaged in video communication. Generally speaking, when the head and face of a participant appear in the video picture, the head of each participant in the video picture is regarded as a head object. In this case, a head object may represent a participant. Currently, it is possible to detect and recognize the head or facial regions of each human in the video picture to obtain various head objects. The detection and recognition manner may use existing picture recognition manners, which will not be described separately at present.

The current frame refers to a video picture in the currently received video stream data during the video communication. A close-up box refers to a rectangular box generated based on video picture, which contains at least one head object in the enclosed region. Currently, the close-up box is generated based on coordinates, for example, the rectangular close-up box is generated based on four coordinates (the coordinates of the head or face recognized by head detection or face detection). The close-up box may be visible or invisible. At this point, the picture in the selected area of the close-up box in the video picture may be referred to as the close-up box selected in the video stream data, and one or more head objects contained in the close-up box may be considered as the corresponding principal objects of the close-up box. Each close-up box has at least one corresponding principal object, and the principal object may be considered as the head object belonging to the corresponding close-up box. The close-up picture corresponding to the close-up box may be considered as the close-up picture when performing close up on the principal object. At this point, it is determined whether a participant is enclosed by a close-up box, mainly determined whether the head region (i.e. head object) of the participant is enclosed by the close-up box.

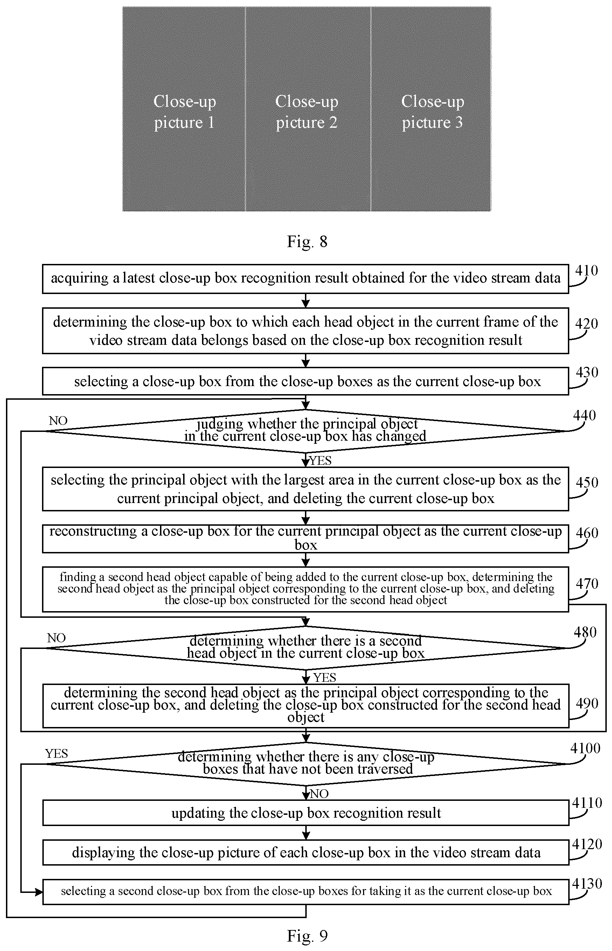

It should be understood that when the number of close-up boxes changes, the corresponding aspect ratio of the close-up boxes also changes to ensure that when displaying close-up pictures in the close-up boxes, each close-up picture may be adaptively arranged to ensure the viewing effect. For example, Fig. 7 is a schematic diagram of a close-up picture arrangement according to an embodiment of the present disclosure, and Fig. 8 is a schematic diagram of another close-up picture arrangement according to an embodiment of the present disclosure. Fig. 7 shows a schematic diagram of a close-up picture arrangement when displaying two close-up pictures of close-up boxes, and the two close-up pictures are arranged left and right in a ratio of 1:1. Fig. 8 shows schematic diagram of the close-up picture arrangement when displaying three the three close-up pictures of close-up boxes, and the three close-up pictures are arranged left, right, and right in a ratio of 1:1:1. When displaying a close-up picture, the aspect ratio of the close-up picture is the same as that of the close-up box, and is related to the number of close-up boxes. For example, the aspect ratio required for two close-up boxes is different from that required for three close-up boxes. Referring to Fig. 7, when there are two close-up boxes, the aspect ratio of the close-up box is 8:9, while referring to Fig. 8, when there are three close-up boxes, the aspect ratio of the close-up box is 16:27. Currently, when the device for determining close-up picture creates or updates a close-up picture, the aspect ratio of each close-up box may be determined based on the number of close-up boxes, and then in combination with the aspect ratio and the display size of the corresponding principal object in the video picture, the size of the close-up box in the video picture is determined. When there are multiple principal objects in the close-up box, the size of the close-up box is determined based on the principal object with the largest display size. Optionally, the size relationship between the close-up box and the principal object is: the height of the close-up box=p * the height (or width) of the principal object in the video picture, the width of the close-up box=q * the height (or width) of the principal object in the video picture, where p and q are coefficients and their values are related to the current aspect ratio of the close-up box. As for whether to calculate the close-up box based on the width or height of the principal object in the video picture, it may be pre-set by the device for determining close-up picture.

When the device for determining close-up picture receives the current frame picture, the device for determining close-up picture recognizes each head object and determines the close-up box to which the head object belongs. At this point, each head object has a corresponding close-up box. In an embodiment, the device for determining close-up picture determines the close-up boxes to which each head object in the current frame belongs based on the close-up box recognition result of the previously received video stream data. In the close-up box recognition result, there are descriptions of each close-up box created (i.e. existing) in the previous video picture, as well as the corresponding principal objects of each close-up box. When the device for determining close-up picture receives video stream data, it is possible to track the principal objects and close-up boxes corresponding to each close-up box in each frame of the video stream data based on the previously obtained close-up box recognition result, so as to determine the close-up box to which each head object belongs in the current frame of picture based on the tracking result when the video picture changes (from the previous frame of picture to the next frame of picture). It should be understood that for the first frame of video picture in the video stream data, the previous close-up box recognition result should be empty. At this time, the device for determining close-up picture may recognize each head object and create a close-up box for each head object to obtain the close-up box to which each head object belongs. For the current frame of video picture in the video stream data, if one or more head objects appear, there will be no close-up box of the newly appearing head object in the close-up box recognition result. In this case, a close-up box may be created for each newly appearing head object to ensure that each head object in the video picture has a corresponding close-up box.

Optionally, the device for determining close-up picture recognizes the close-up box to which each head object belongs at the time of receiving each frame of video, and performs subsequent steps (i.e. steps 320-350) to update the close-up box recognition result frame by frame. Alternatively, for each frame of video received, the device for determining close-up picture recognizes the close-up box to which each head object belongs, and displays in close-up the corresponding principal object based on the close-up picture of the close-up box. The frame rate or duration is set at intervals, and after recognizing the close-up box to which each head object belongs in the previous frame, the subsequent steps (i.e., steps 320-350) are executed to update the close-up box recognition result at intervals.

Step 320, selecting a close-up box from the close-up boxes as the current close-up box.

There are usually more than a close-up box, and a close-up box is selected from more than one as the current close-up box.

As an example, the current close-up box refers to a close-up box that is currently being updated with the principal object. The device for determining close-up picture may randomly select a close-up box from each close-up box in the current frame as the current close-up box, or select a close-up box in a set order (such as from top to bottom, left to right) as the current close-up box, or select based on the order of creating close-up boxes. The creation of each close-up box is based on the order in which each face or head is recognized in human head recognition or facial recognition.

Step 330, when there is a second head object capable of being added to the current close-up box, determining the second head object as the principal object corresponding to the current close-up box, and deleting the close-up box constructed for the second head object.

The existence of a second head object capable of being added to the current close-up box should be understood as a second head object being contained in the close-up picture of the current close-up box, but the close-up box to which the second head object belongs is not the current close-up box, that is, the second head object is currently serving as the principal object of the other close-up box.

Optionally, the determination manner of a second head object capable of being added to the current close-up box is currently not limited.

For example, when a second head object are detected in the close-up picture of the current close-up box, it is determined that a second head object is capable of being added to the current close-up box. It should be understood that when recognizing the head object and creating a close-up box, the coordinates of the head object and the close-up box may be known. At this time, based on the coordinates of both, it is possible to determine whether the head object appears in the close-up box and which one it appears in.

For example, a stable box is created based on the existing principal object in the current close-up box, the stable box refers to a rectangular region created center around the corresponding principal object. The stable box is different from close-up box. The close-up box is used to achieve close-up of the principal object, and their aspect ratio varies with the number of close-up boxes. The stable box is used to determine whether there are a second head object around the corresponding principal object, that is, to determine whether there are head objects that are closer in distance. Similar to the close-up box, the stable box is also generated based on coordinates, for example, the rectangular stable box is generated based on four coordinates (the coordinates of the head or face recognized by head recognition or facial recognition). The stable box may be visible or invisible. The size of the stable box is determined based on the display size of the corresponding principal object in the video stream data. In an embodiment, the height of the stable box=n * the height (or width) of the principal object in the video picture, and the width of the stable box=m * the height (or width) of the principal object in the video picture, where n and m are coefficients with fixed values. As for whether to use the width or height of the principal object in the video picture to calculate the stable box, it is possible to be pre-set by the device for determining close-up picture. Currently, by setting reasonable coefficients for n and m, stable box may cover as much area as possible in various aspect ratios of close-up boxes, ensuring the rationality and accuracy of finding head objects that are closer together. After creating a stable box, a second head object capable of being added to the current close-up box may be determined based on the stable box. If there is only one principal object in the current close-up box, a corresponding stable box may be created based on that principal object. If there are multiple principal objects in the current close-up box, a corresponding stable box may be created based on the principal object with the largest area in the video picture. When determining the second head object capable of being added to the current close-up box based on the stable box, it is possible to use the head objects covered by a second head object except for the principal object with the largest area as the head object capable of being added to the current close-up box, or move the stable box around the principal object with the largest area corresponding to the stable box. During the movement of the stable box, a second head object covered by the stable box is found as the head objects capable of being added to the current close-up box. Currently, a second head object covered by the stable box is generally located within the current close-up box.

In an embodiment, when a change in the principal object in the current close-up box is detected, such as a change in the number of principal objects, a significant change in the display area due to excessive movement of the principal object, or the principal object moving out of a specified stable box (such as a stable box created based on the principal object with the largest area), it indicates that the current close-up box may no longer be applicable to the internal principal object. At this time, the close-up box may be reconstructed for each principal object. When reconstructing, the current close-up box is deleted and a close-up box is reconstructed for the principal object with the largest area as the current close-up box. Afterwards, the second head object capable of being added to the current close-up box is determined until there are no other head object capable of being added. At this point, if there is still a head object without a close-up box, it is possible to create another close-up box for that head object and find a second head object capable of being added to the current close-up box when the close-up box is updated. Correspondingly, when it is detected that the principal object in the current close-up box has not changed, it indicates that the current close-up box is still applicable to the internal principal object. At this time, it is only necessary to judge whether there is a second head object in the current close-up box (the close-up box to which the head object belongs is not the current close-up box). If so, it is determined that there are a second head object capable of being added to the current close-up box. Otherwise, there is no need to update the current close-up box and the corresponding principal object.

For example, when there is a second head object capable of being added to the current close-up box, the second head object is used as the principal objects of the current close-up box. At this point, the number of principal objects corresponding to the current close-up box is increased by 1. After a second head object is used as the principal object of the current close-up box, in order to avoid a second head object appearing in another close-up box, in the embodiment, the close-up box constructed for a second head object are deleted. Optionally, after deleting the close-up box, if there is another principal object in the close-up box, it is possible to recreate a close-up box for another principal object. At this point, if the number of close-up boxes changes, the aspect ratio of the close-up boxes will also change.

Optionally, if a head object is first added to the current close-up box as the corresponding principal object, when another close-up box is subsequently processed, in a case of determining that the head object may also be added to another close-up box subsequently, the head object will not be processed, and the first confirmed close-up box capable of being added will be used as the reference.

Optionally, after adding a second head object to the current close-up box, it would look up a second head object capable of being added to the current close-up box until no other head object is found. At this point, it may be considered as updating the current close-up box and its corresponding principal object. Afterwards, step 340 is performed.

Step 340, selecting a second close-up box from the close-up boxes and updating the current close-up box as the second close-up box, and returning to perform an operation of, when there is a second head object capable of being added to the current close-up box, determining the second head object as the principal object corresponding to the current close-up box, and deleting the close-up box constructed for the second head object until all current close-up boxes are traversed.

As an example, another non-updated close-up box is selected as the current close-up box and step 330 is executed, so as to update the current close-up box and its corresponding principal object again.

It should be understood that after updating a current close-up box, it should look up whether there is any close-up box that have not been used as the current close-up box. If so, a close-up box is selected from the ones that have not been used as the current close-up box to update the current close-up box as the selected close-up box. Step 330 is executed. If not, it is considered that all close-up boxes and their corresponding principal objects have been updated, and then step 350 may be executed.

Optionally, after traversing all close-up boxes, the currently determined close-up box and its corresponding principal object may be saved, the close-up box recognition result is updated for subsequent use.

Step 350, displaying the close-up picture selected by each close-up box in the video stream data.

As an example, the close-up box, of the close-up box, selected in the current frame of the video stream data is acquired, and each close-up box has a corresponding close-up box. Afterwards, each close-up picture is displayed in the corresponding arrangement (depending on the number of close-up boxes) on the display screen.

In an embodiment, when the principal object in the close-up box is updated, in order to ensure that the layout of each principal object in the close-up box is as reasonable as possible and reduce the construction differences between different close-up boxes, the selection region of each close-up box is adjusted based on the principal object in the close-up box when displaying the close-up picture of each close-up box. When adjusting, the smallest rectangular region containing all the principal objects in the close-up box is first determined. Afterwards, it may create a virtual object centered on a center point of the smallest rectangular region, and the virtual object refers to the virtual head region. The area of this virtual object is equal to that of the principal object with the largest area in the close-up box. At this time, it may also be considered as creating a head object with the same area based on the principal object with the largest area as the virtual object. The center of this virtual object is the center of the smallest rectangular region. Afterwards, the position of the close-up box is determined based on the position of this virtual object, the size and/or ratio of the close-up box is adjusted based on the required aspect ratio (the required aspect ratio is pre-set, for example, the aspect ratio of the close-up box is 8:9 for two close-up boxes and 16:27 for three close-up boxes) and size (the size is determined based on the size of the virtual object, for example, the height of the close-up box is determined by multiplying the height of the virtual object by a preset coefficient). At this point, each close-up box selects the close-up picture based on the position and size of the virtual object, thereby reducing the construction differences between different close-up pictures. When displaying the close-up picture, the difference in area between the largest principal objects in each close-up picture is relatively small. It should be understood if there is only one principal object in the close-up box, there is no need to create a virtual object, only the selection position of the close-up box in the video stream data needs to be updated centered on the principal object. Afterwards, the close-up pictures in each close-up box may be displayed.

As mentioned above, by recognizing a close-up box to which each head object in the current frame of video stream data belongs, where each close-up box corresponds to at least one principal object, and the principal object is the head object is determined as the head object that has been enclosed by the corresponding close-up box; afterwards, selecting a close-up box from the close-up boxes as the current close-up box; and when there is a second head object capable of being added to the current close-up box, determining the second head object as the principal object corresponding to the current close-up box, and deleting the close-up box to which the second head object belongs; selecting a second close-up box from the close-up boxes for taking it as the current close-up box, and continuing to determine whether there is the second head object that may be added in as the current close-up box until all close-up boxes are traversed; displaying the close-up picture selected by each close-up box in the video stream data, the technical problem of repeatedly appearing close participants in multiple close-up boxes during close-up construction of video communication participants is solved. When a participant (i.e. head object) may be added to other close-up box, the close-up box of that participant is deleted, so that the participant only appears in a close-up box, avoiding the participant appearing in multiple close-up boxes as much as possible, and improving the communication efficiency of users in video communication.

Fig. 9 is a flowchart of another method for determining close-up picture according to an embodiment of the present disclosure. This embodiment is an exemplary description of a process of how to determine a second head object capable of being added to the current close-up box, a process of determining the close-up box to which each head object belongs in the current frame, and a process of displaying the close-up picture of each close-up box in the video stream data based on the previous embodiment. Referring to Fig. 9, the method for determining close-up picture includes steps 410 to 4130.

Step 410, acquiring a latest close-up box recognition result obtained for the video stream data.

In the close-up box recognition result, there is description of each close-up box created in the video picture, as well as the corresponding principal object for each close-up box. After each update of the close-up box recognition result, the current updated close-up box recognition result is saved as the latest obtained result.

In an embodiment, taking the setting duration or frame rate at intervals as an example to update the close-up box recognition result, after updating the close-up box recognition result once, timing or frame rate recording starts. When acquiring the current frame in the video stream data, it is determined whether the corresponding timing has reached the set duration or whether the corresponding frame rate has reached the set frame rate. If it has, it is determined that the close-up box recognition result needs to be updated. At this time, the latest close-up box recognition result is acquired, that is, the latest updated close-up box recognition result is acquired, and step 420 is executed. If not achieved, each close-up box and principal object within each frame of the video stream data is tracked based on the latest close-up box recognition result, and the selected close-up boxes is displayed.

Step 420, determining the close-up box to which each head object in the current frame of the video stream data belongs based on the close-up box recognition result.

For example, after recognizing each head object in the current frame, it is possible to determine which principal object of the close-up box each head object should be based on the close-up box recognition result. Optionally, the position of the same head object in consecutive frames of the video picture should be the same or very close. Therefore, by combining the position of the head object and the position of the principal object, it may be determined which principal object the head object should be. Afterwards, based on the close-up box to which each principal object belongs in the close-up recognition result, the close-up box to which each head object belongs in the current frame may be determined.

It should be understood that for the first frame in the video stream data, the latest close-up box recognition result acquired should be empty. In this case, a close-up box may be created for each head object in the picture.

Step 430, selecting a close-up box from the close-up boxes as the current close-up box.

Step 440, judging whether the principal object in the current close-up box has changed. If the principal object in the current close-up box changes, step 450 is executed. If the principal object in the current close-up box has not changed, step 480 is executed.

As an example, during the process of tracking video stream data and displaying close-up pictures based on the recorded close-up boxes and corresponding principal objects in the close-up box recognition result, it may be determined whether the principal object within the current close-up box in the current frame have changed when updating the close-up box recognition result. After the change, it indicates that the current close-up box may no longer be applicable to its corresponding principal object. At this point, step 450 is executed. No changes have occurred, it indicates that the current close-up box is still applicable to its corresponding principal object. At this point, step 480 is executed.

In an embodiment, the judging whether the principal object in the current close-up box has changed may be: judging whether the number of principal objects in the current close-up box has changed, or judging whether the area change range of the principal object with the largest area in the current close-up box exceeds an area threshold, or judging whether there is a principal object in the current close-up box exceeding the stable box created for the principal object with the largest area.

When judging whether the number of principal objects in the current close-up box has changed, it is mainly to determine whether the number of principal objects has decreased, that is, whether a principal object leaves the current close-up box. If the number changes, it indicates that a principal object has left the current close-up box. Therefore, it is necessary to reconstruct applicable close-up box for each principal object. In an embodiment, when tracking the current close-up box and its corresponding principal object based on the close-up box recognition result, the position of the principal object in the video stream data and the position of the current close-up box in the video stream data may be used to determine whether the principal object has left the current close-up box, and thus determine whether the number of principal objects in the current close-up box has changed. If the number changes, it is determined that the principal object has changed and step 450 is executed. Otherwise, step 480 is executed.

When judging whether the area change range of the principal object with the largest area in the current close-up box exceeds an area threshold, the area change range should be understood as the change range of the display area of the principal object in the close-up box, and the area threshold is a pre-set value. When the area change range of the largest principal object in the current close-up box exceeds the area threshold, it may indicate that the principal object with the largest area has changed to another principal object (i.e. the display area of the original principal object with the largest area has decreased), or it may indicate that the area of the principal object with the largest area has increased. The size of the close-up box is related to the size of the largest principal object. When the size of the principal object with the largest area changes, the size of the close-up box also needs to be adjusted in a timely manner. Then, when adjusting the size, the principal object applicable to the close-up box may also change. Therefore, it is necessary to update the close-up box based on the principal object with the largest area and determine the applicable principal object again. In an embodiment, when tracking each principal object in the current close-up box, the display area of each principal object may be detected (which may be acquired by the width and height of the principal object). At this time, the area change range may be determined based on the display area of the principal object with the largest area in the current close-up box and the display area of the principal object when the close-up box recognition result was previously determined. When the area change range exceeds the area threshold, it is determined that the principal object has changed, and step 450 is executed. Otherwise, step 480 is executed.

When judging whether there is a principal object in the current close-up box exceeding the stable box created for the principal object with the largest area, a stable box is created based on the principal object with the largest area in the current close-up box. During the process of tracking each principal object and its corresponding close-up box in the video stream data, the stable box is used to recognize whether another principal object that is closer to the principal object have become farther away. If there is another principal object that exceed the stable box, it indicates that the distance between another principal object and the principal object with the largest area may have increased, and a close-up box may no longer be able to frame both principal objects at the same time. That is, another principal object and the principal object with the largest area may need to belong to different close-up boxes. Therefore, when tracking each principal object in the video stream data, a stable box may be created for the principal object with the largest area in the current close-up box, and it may be determined whether another principal object in the current close-up box exceed this stable box. When there is a principal object in the current close-up box that exceeds the stable box created for the principal object with the largest area, it is determined that the principal object has changed and step 450 is executed. Otherwise, step 480 is executed.

In practical applications, if any of the three schemes mentioned above is met, it may be considered that the principal object in the current close-up box has changed.

Step 450, selecting the principal object with the largest area in the current close-up box as the current principal object, and deleting the current close-up box.

As an example, based on the close-up picture in the current close-up box selected in the current frame, the display area of each principal object corresponding to the current close-up box in the current frame may be determined. Afterwards, the principal object with the largest area is selected as the current principal object to reconstruct an applicable close-up box based on the current principal object. Moreover, the existing current close-up box may be deleted, and the corresponding principal object of the current close-up box will no longer be the principal objects of the current close-up box. Optionally, in the deleted current close-up box, if there is another principal object except for the one with the largest area, a close-up box may be created for another principal object, but not as the current close-up box, to ensure that every head object in the current frame has a corresponding close-up box.

It should be understood that the larger the area of the principal object in the current frame, the larger the area of the principal object in the close-up picture when displayed.

Step 460, reconstructing a close-up box for the current principal object as the current close-up box.

As an example, the close-up box for the current principal object is reconstructed and is used as the current close-up box. When constructing the close-up box, the aspect ratio of the close-up box may be determined based on the number of close-up boxes, and then the size of the close-up box may be determined based on the aspect ratio of the close-up box and the height (or width) of the current principal object when being displayed in the current frame. Afterwards, the close-up box may be created with the current principal object as center based on the aforementioned size. It should be understood that when the number of close-up boxes changes, the aspect ratio of the close-up boxes also adapts to changes. For example, the principal object of a close-up box is added to another close-up box, causing the close-up box to be deleted and resulting in a change in the number of close-up boxes, at this time, based on the latest number of close-up boxes, the aspect ratio of the close-up box is determined, and then the size of each close-up box is modified based on the aspect ratio of the close-up box.

After creation, this close-up box is used as the current close-up box. At this point, the current close-up box contains a principal object, which serves as the principal object of the current close-up box.

Step 470, finding a second head object capable of being added to the current close-up box, determining the second head object as the principal object corresponding to the current close-up box, and deleting the close-up box constructed for the second head object.

As an example, a second head object capable of being added to the current close-up box is found. The finding manner may be to use a second head object located in the current close-up box as head objects capable of being added to the current close-up box. The finding manner may also be to construct a stable box to determine the head objects that are closer to the current principal object, and then obtain the head objects capable of being added to the current close-up box.

In an embodiment, the manner of constructing a stable box being to find a head object capable of being added to the current close-up box is described as an example. At this point, step 470 includes steps 471-474.

Step 471, constructing a stable box centered on the current principal object.

In an embodiment, the size of the stable box is determined by the display size of the corresponding current principal object in the current frame picture. The height of the stable box=n * the height (or width) of the principal object in the video picture, the width of the stable box=m * the height (or width) of the principal object in the video picture, where n and m are fixed coefficients. As for whether to use the width or height of the principal object in the video picture to calculate the stable box, it may be determined by the close-up picture and pre-set by the device.

For example, a coefficient that determines the size of a stable box is acquired in advance, based on the width (or height) of the current principal object in the current frame and the preset coefficient, the size of the stable box may be determined. Afterwards, with the current principal object as center, a stable box of the corresponding size is constructed, the stable box is the stable box of the current principal object. The region where the stable box is located may be considered as the region that is closer to the current principal object. At this point, as long as the display size of the current principal object does not change, regardless of whether the aspect ratio of the close-up box changes, the size of the stable box will not change.

Generally speaking, the stable box is located inside the close-up box, and in rare cases, a very small part of the stable box extends beyond the close-up box.

Step 472, moving the stable box and finding a second head object capable of being added to the current close-up box during the movement, where the second head object capable of being added to the current close-up box intersects with the stable box at corresponding time during the movement.

After constructing the stable box, the stable box is moved. In an embodiment, during the movement of the stable box, the corresponding current principal object position remains unchanged and always stays in the stable box. Regardless of which direction the stable box is moved to, it ensures that the current principal object does not exceed the stable box, so that the stable box always moves around the current principal object. At this time, the region covered by the stable box during the movement may be considered as the surrounding region of the current principal object, thereby ensuring the accuracy of the found second head object based on the stable box. Specifically, during the process of moving the stable box, if the stable box covers a second head object, a second head object may be considered closer to the current principal object, and another may be added to the current bounding box corresponding to the current principal object. The "the second head object may be covered by the stable box" refers to the display region of the second head object completely located within the stable box in the current frame. At present, the second head object covered by the stable box may be considered as head object capable of being added to the current close-up box. Generally speaking, the head object is located in the current close-up box and intersects with the stable box at a certain moment during its movement (i.e., the corresponding moment).

When moving the stable box, the movement direction of the stable box may be pre-set, as long as it covers the surrounding region of the current principal object during the movement process.

In an embodiment, during the movement of the stable box, multiple a second head objects may be covered. In this case, only one head object is selected as the currently found second head object to avoid finding too many head objects, which may result in the area composed of too many head objects eventually exceeding the area of the stable box. Optionally, among the multiple a second head objects covered, the second head object closest to the current principal object is selected as the currently found head object.

In an embodiment, during the movement of the stable box, there may be intersections with multiple head objects. However, not every head object may be added to the current close-up box. For example, during the movement of the stable box, there may be intersections with a certain head object, but the head object is far away from another principal object in the current close-up box, therefore, it is not applicable to be added to the current close-up box. Accordingly, this step may further include steps 4721 to 4723.

Step 4721, moving the stable box and finding a second head object located within the current close-up box that intersects with the stable box during the movement.

For example, based on the coordinates of each head object and the coordinates of the current close-up box, a second head object located in the current close-up box may be clear, afterwards, the stable box may be used to find these a second head objects located in the current close-up box. During the movement of the stable box, if there is an intersection with a second head object in the current close-up box, it may be considered that the second head object currently found may be added to the current close-up box.

Optionally, if there are multiple intersecting head objects during the movement, the head object closest to the principal object corresponding to the stable box may be selected, or the head object found first may be selected.

Step 4722, determining the smallest rectangular region containing the found second head object and the principal object in the current close-up box.

After the stable box finds a second head object, it may be further determined whether the second head object may be added to the current close-up box. When determining, the smallest rectangular region containing the found second head object and the principal object in the current close-up box is first determined.

Specifically, after the stable box finds the second head object, a rectangular region is determined, the rectangular region contains the found second head object and each principal object corresponding to the current close-up box, and is the smallest rectangular region containing the aforementioned objects. The smallest rectangular region should be understood as the smallest region required to contain the aforementioned object.

Step 4723, when the width and height of the smallest rectangular region are both less than the width and height of the stable box, determining that the found second head object is capable of being added to the current close-up box.

After obtaining the smallest rectangular region, it is determined whether the width of the smallest rectangular region is less than the width of the stable box, and whether the height of the smallest rectangular region is less than the height of the stable box. If both are less than, it indicates that the stable box may completely cover the smallest rectangular region, that is, the second head object found by the stable box may be covered by the stable box, that is, the distance between the second head object found by the stable box and each principal object corresponding to the current close-up box is relatively close. By Using a close-up box may frame each principal object and the found head object. Therefore, it may be determined that the found second head object may be added to the current close-up box. Afterwards, step 473 is executed. If the width of the smallest rectangular region is greater than that of the currently used bounding box, or if the height of the smallest rectangular region is greater than that of the currently used bounding box, it indicates that the distance between the found second head object and one or more principal objects corresponding to the current close-up box is too far. Using a close-up box may not be able to frame all principal objects and the found head objects, so the currently found head objects are abandoned. At this point, if it is determined that the head object may be added to the current close-up box cannot be found, step 4100 may be executed.

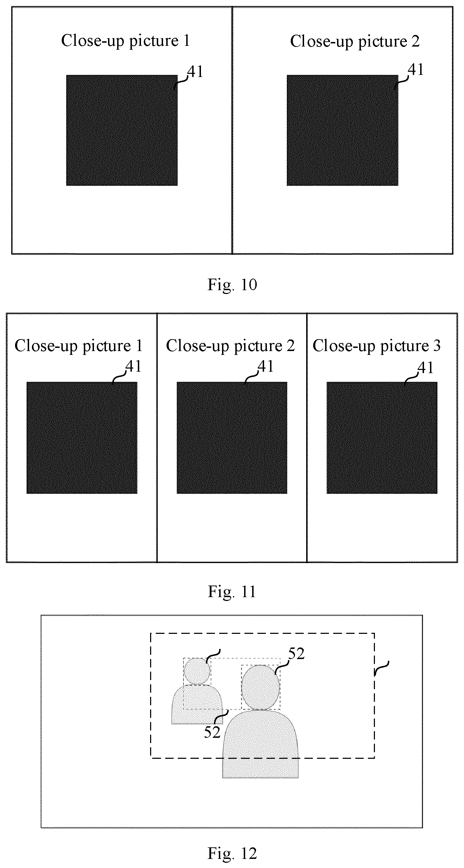

It should be noted that as long as the display size of the current principal object does not change, even if the aspect ratio of the close-up box changes, the size of the corresponding stable box will not change. Then, when the head object is relatively stable in the video stream data (i.e. does not move or moves very little), the head object found based on the stable box is also relatively fixed, which can reduce the problem of close-up picture shake caused by changes in the aspect ratio of the close-up box. For example, Fig. 10 is a schematic diagram of a close-up picture and stable box according to an embodiment of the present disclosure, and Fig. 11 is a schematic diagram of another close-up picture and stable box according to an embodiment of the present disclosure. Currently, the two close-up pictures shown in Fig. 10 have been changed to three close-up pictures shown in Fig. 11. At this point, the aspect ratio of the close-up pictures has significantly changed, but the size of the stable box 41 has not changed. Then, the principal object corresponding to the close-up box finally found based on the stable box 41 will not undergo significant changes, that is, the principal object in the close-up picture will not undergo significant changes, thereby effectively avoiding the close-up picture shake caused by changes in the aspect ratio of the close-up box.

Step 473, determining the found second head object as the principal objects corresponding to the current close-up box, and deleting the close-up box constructed for the second head object.

When the second head object capable of being added to the current close-up box is found, the second head object is used as the principal object of the current close-up box. At this point, the number of principal objects corresponding to the current close-up box is increased by 1. After the second head object is used as the principal object of the current close-up box, in order to avoid a second head object appearing in another close-up box, in the embodiment, the close-up box constructed for the second head object is deleted. Optionally, after deleting the close-up box, if there is another principal object in the close-up box except for the aforementioned head object, a new close-up box may be created for another principal object.

Step 474, selecting the principal object with the largest area in the current close-up box to take it as the current principal object, and returning to perform an operation of constructing a stable box centered on the current principal object until no other head object capable of being added to the current close-up box is found.

For example, the found head object is added to the current close-up box will cause the principal object in the current close-up box to be updated, and at this time, the principal object with the largest area may change. Based on the principle of finding the head object around the principal object with the largest area, when the principal object in the current close-up box is updated, the current principal object with the largest area is re-selected to take it as the current principal object, and step 471 is executed, that is, a stable box is created for the current principal object again to find a second head object closer to the current principal object and add them to the current close-up box until the stable box is created, no other head object capable of being added to the current close-up box is found. At this point, it is determined that no other head object is found through the stabilization box, another close-up box may be selected as the current close-up box, and it may be re-determined whether a second head object may be added to the current close-up box, that is, step 4100 may be executed.

Step 480, determining whether there is a second head object in the current close-up box. If there is a second head object, step 490 is executed; if there is no other head object, step 4100 is executed.

For example, if the principal object in the current close-up box has not changed, it may be further judged whether there is a second head object in the current close-up box, that is, it may be further determined whether there is a head object that are not principal objects entering the corresponding selection region of the current close-up box.

When there is a second head object within the current close-up box, it may be considered that the display region of the second head object in the current frame is completely located within the current close-up box.

In an embodiment, if there is a second head object in the current close-up box, step 490 is executed to determine the second head object as the principal object of the current close-up box. Otherwise, step 4100 is executed.

Step 490, determining the second head object as the principal object corresponding to the current close-up box, and deleting the close-up box constructed for the second head object. Step 4100 is executed.

For example, if there is a second head object in the current close-up box, the second head object will be used as the principal object of the current close-up box. At this point, the number of principal objects corresponding to the current close-up box is increased by 1. After the second head object is used as the principal object of the current close-up box, in order to avoid the second head object appearing in another close-up box, in the embodiment, the close-up box constructed for the second head object is deleted. Optionally, after deleting the close-up box, if there is another principal object in the close-up box except for the aforementioned head objects, a new close-up box may be created for another principal object.

In an embodiment, if there is a second head object in the current close-up box that is located at the edge of the current close-up box and are far away from each of the principal objects in the current close-up box, the second head object is added to the current close-up box, resulting in poor layout of the principal objects in the close-up picture, which may make it difficult for the user to see the head objects located at the edge. It is better to place the second head object in another close-up box (the second head object is located at the center of a second close-up box). At this point, although the second head object may appear in two close-up boxes, the second head object is located in the center of a close-up box and at the edge of a second close-up box (perhaps only some regions are located in that close-up box), so the impact on the viewing experience of users when watching the special picture is small, and users will not see that the area of the head object in both close-up boxes is large. Based on this, if there is a second head object in the current close-up box, it may be further judged whether the second head object may be added to the current close-up box. At this point, if there is a second head object, the second head object is determined as the corresponding principal object of the current close-up box, and the close-up box constructed for the second head object is deleted, which specifically is, if there is a second head object, then selecting the principal object with the largest area in the current close-up box and updating as the current principal object; constructing a stable box centered on the current principal object; moving the stable box and finding a second head object capable of being added to the current close-up box during the movement, where the second head object capable of being added to the current close-up box intersect with the stable box at corresponding time during the movement; determining the found second head object as the principal object corresponding to the current close-up box, and deleting the close-up box constructed for the second head object; and selecting the principal object with the largest area in the current close-up box and updating as the current principal object, and returning to perform an operation of constructing a stable box centered on the current principal object, until no other head object capable of being added to the current close-up box is found.

For example, if there is a second head object in the current close-up box, the principal object with the largest area in the current close-up box is selected to be updated as the current principal object, afterwards, a stable box is created and the object capable of being added to the current close-up box is found based on the stable box. This part may refer to the relevant descriptions in steps 471-474. Until there is no other head object in the current close-up box, or until every a second head object present in the current close-up box is determined whether it may be used as the corresponding principal object of the current close-up box, that is, until it is determined that there are no principal object capable of being added to the current close-up box. Afterwards, step 4100 may be executed.

Step 4100, determining whether there is any close-up boxes that have not been traversed. If all the close-up boxes in the current video stream data have been traversed, step 4110 is executed. If not all the close-up boxes in the current video stream data have been traversed, step 4130 is executed.

For example, if each close-up box in the current frame is used as the current close-up box and the principal object therein is confirmed, it may be determined that each required close-up box and its corresponding principal object have been obtained. Therefore, step 4100 may be executed. If there is still a close-up box in the current frame that have not been traversed as the current close-up box, the close-up box that have not been traversed is updated as the current close-up box, that is, step 4130 is executed to continue determining the corresponding principal object of the current close-up box.

Step 4110, updating the close-up box recognition result. Step 4120 is executed.

As an example, the currently obtained each close-up box and its corresponding principal object are used as the current close-up box recognition result, and the former close-up box recognition result is replaced to update the close-up box recognition result. The close-up box recognition result is used to track each head object and the close-up box to which the head object belongs in the video stream data, and display the close-up picture of each close-up box. The next time the close-up recognition result needs to be updated, the current close-up box recognition result may be used to determine the close-up box to which each head object in the video picture belongs.

Step 4120, displaying the close-up picture of each close-up box in the video stream data.

In an embodiment, step 4120 includes: when there are multiple principal objects corresponding to the close-up box, creating a corresponding rectangular region for the close-up box, where the rectangular region is the smallest rectangular region containing all the principal objects within the corresponding close-up box, creating a virtual object centered on a center point of the rectangular region, where the area of the virtual object is equal to the area of the principal object with the largest area within the corresponding close-up box, updating a selection position of the close-up box in the video stream data based on the virtual object, so that the updated close-up box is centered on the virtual object; when the number of the principal object corresponding to the close-up box is one, updating the selection position of the close-up box in the video stream data centered on the principal object; and displaying the selected close-up picture of respective updated close-up boxes in the video stream data.

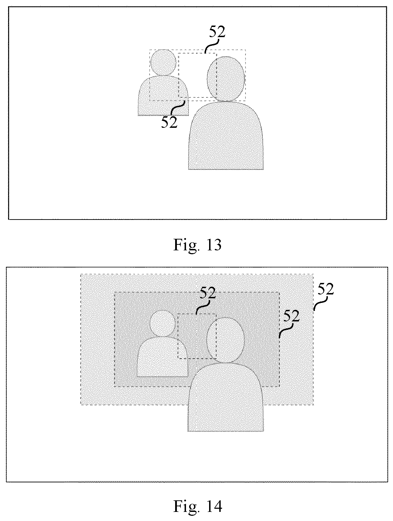

For example, when there are multiple principal objects in a close-up box, in order to make each principal object as centered as possible and ensure a reasonable distribution of principal objects in the close-up picture, a rectangular region is created, the rectangular region is the smallest rectangular region containing each principal object (mainly the head region of the principal object). Through this rectangular region, it is possible to clarify which region each principal object is concentrated in. Afterwards, it may create a virtual object centered on the center point of the rectangular region, currently referred to as the virtual object. The area of this virtual object is equal to the area of the largest principal object in the close-up box. At this point, the virtual object may be considered as the simulated and principal object, with the largest area, displayed at the center of the close-up box. Afterwards, the position of the close-up box in the video stream data is updated with the virtual object as center. Currently, the position of the close-up box in the video stream data is referred to as the selection position, and the center of the selection position is the virtual object. The updating the selection position of the close-up box in the video stream data based on virtual objects includes: using the virtual object as center of the close-up box, updating the selection position of the close-up box in the video stream data based on the size of the close-up box. The size of the close-up box is related to the aspect ratio of the close-up box and each principal object with the largest area, so that each principal object can be distributed as much as possible in the center of the close-up box. For example, Fig. 12 is a schematic diagram of a close-up box according to one embodiment of the present disclosure. Referring to Fig. 12, there are two principal objects in the close-up box 51, currently referred to as a principal object 52 and a principal object 53, respectively. At this point, based on the head region of the principal object 52 and the head region of the principal object 53, a smallest rectangular region 54 containing two head areas is created. Afterwards, a virtual object is created with the center point of the smallest rectangular region 54 as center, and the display area of the virtual object is equal to that of the principal object 52. Fig. 13 is a schematic diagram of a virtual object according to one embodiment of the present disclosure. Referring to Fig. 13, a region where the virtual head is located is created in the smallest rectangular region 54 shown in Fig. 12 as the virtual object 55. Afterwards, based on the position of the virtual object 55, the position of the close-up box is changed. Fig. 14 is a schematic diagram of another close-up box according to an embodiment of the present disclosure. Referring to Fig. 14, it shows a close-up box 56 with the virtual object 55 as center and a stable box 57 with the virtual object 55 as center. At this point, when judging whether the principal object in the close-up box 5 has changed, the close-up box 56 and the stable box 57 may be used as references.

When there is a principal object in the close-up box, the principal object is used as center and the selection position of the close-up box in the video stream data is updated, so that the principal object is located at the center of the video stream data.

Afterwards, the close-up picture in each close-up box may be displayed based on the set size. The set size is related to the arrangement of the close-up picture. For example, referring to Fig. 7, when the close-up picture is arranged in a ratio of 1:1, the size of the current display region of each close-up picture may be determined, afterwards, the close-up picture in each close-up box may be displayed in each display region.

Step 4130, selecting a second close-up box from the close-up boxes for taking it as the current close-up box. Step 440 is executed.

As mentioned above, by judging whether the principal object in the current close-up box has changed, and when it has changed, the current principal object is found again and the current close-up box is constructed, afterwards, the head object capable of being added to the current close-up box is found, and the head object is added to the current close-up box, which can ensure that when the principal object in the close-up box changes, applicable close-up box is reconstructed for each principal object, thereby ensuring the rationality of the layout of the principal object in the close-up picture. Moreover, by a manner of constructing a stable box and moving the stable box, the head object capable of being added to the current close-up box is found, so that all the found head objects are located in the surrounding region of the current principal object, that is, close to the current principal object, which ensures the rationality of the found head objects. In addition, updating the principal object with the largest area as the current principal object may also ensure that the surrounding region of the principal object with the largest area is used as a reference when finding the head object, and further ensure a more reasonable layout of the principal objects in the close-up picture. Moreover, when the head object is found based on the stable box, the width and height of the smallest rectangular region containing the head object and each principal object in the current close-up box are compared with the width and height of the stable box to further judge whether the head object capable of being added to the current close-up box is found. This ensures that the head object added to the current close-up box is closer to each principal object, and further ensures a more reasonable layout of the principal objects in the close-up picture. Moreover, when the principal object in the current close-up box has not changed, by determining whether there is a second head object in the current close-up box, when there is a second head object, it is further judged whether a second head object is added to the current close-up box, which can avoid missing the head object capable of being added to the current close-up box. Moreover, by detecting changes in the number, area, etc. of the principal object, it is possible to determine whether the principal object in the current close-up box has changed, ensuring valid recognition of the changes in the principal object. Moreover, when there are multiple principal objects corresponding to the close-up box, the selection position of the close-up box is adjusted by constructing virtual objects, which can ensure a more reasonable distribution of each principal object in the close-up picture, without highlighting a particular principal object as center.

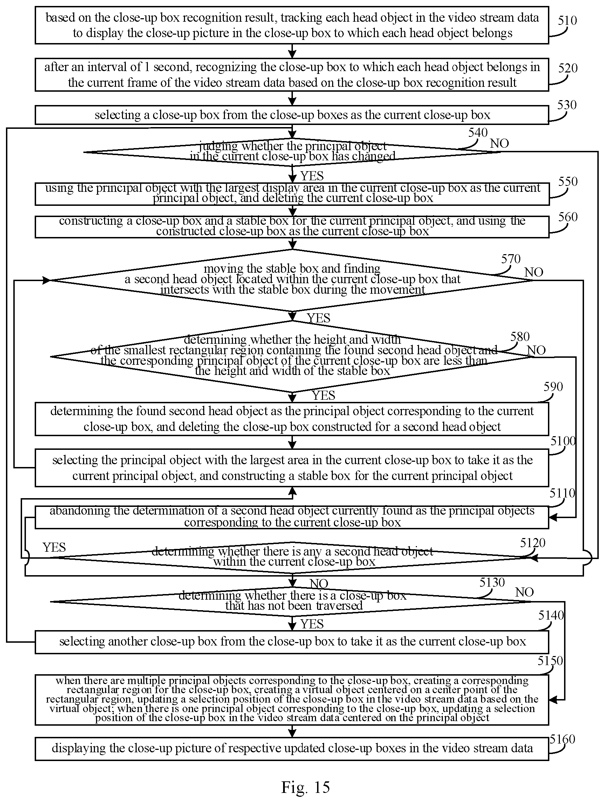

Thereinafter, a method for determining close-up picture according to an embodiment of the present disclosure is described in exemplary. In this example, the close-up box recognition result is updated once per second. Fig. 15 is an example flowchart of a method for determining close-up picture according to one embodiment of the present disclosure.

Referring to Fig. 15, the method for determining close-up picture includes steps 510 to 5170.

Step 510, based on the close-up box recognition result, tracking each head object in the video stream data to display the close-up picture in the close-up box to which each head object belongs.

Step 520, after an interval of 1 second, recognizing the close-up box to which each head object belongs in the current frame of the video stream data based on the close-up box recognition result.

Step 530, selecting a close-up box from the close-up boxes as the current close-up box.

Step 540, judging whether the principal object in the current close-up box has changed. If there is a change, Step 550 is executed. If no changes have occurred, step 5120 is executed.

Step 550, using the principal object with the largest display area in the current close-up box as the current principal object, and deleting the current close-up box.

Step 560, constructing a close-up box and a stable box for the current principal object, and using the constructed close-up box as the current close-up box.

Step 570, moving the stable box and finding a second head object located within the current close-up box that intersects with the stable box during the movement. If no other head object is found, step 5130 is executed. If a second head object is found, step 580 is executed.

Step 580, determining whether the height and width of the smallest rectangular region containing the found second head object and the corresponding principal object of the current close-up box are less than the height and width of the stable box. If they are less than, step 590 is executed; otherwise, step 5110 is executed.

Step 590, determining the found second head object as the principal object corresponding to the current close-up box, and deleting the close-up box constructed for a second head object. Step 5100 is executed.

Step 5100, selecting the principal object with the largest area in the current close-up box to take it as the current principal object, and constructing a stable box for the current principal object, and returning to execute step 570.

Step 5110, abandoning the determination of a second head object currently found as the principal objects corresponding to the current close-up box. Step 5130 is executed.

Step 5120, determining whether there is any a second head object within the current close-up box. If there is a second head object, step 5100 is executed. If there is no other head object, step 5130 is executed.

Step 5130, determining whether there is a close-up box that has not been traversed. If there is a close-up box that has not been traversed, step 5140 is executed. If there is no close-up box that has not been traversed, step 5150 is executed.

Step 5140, selecting another close-up box from the close-up box to take it as the current close-up box. Step 540 is executed.

Step 5150, when there are multiple principal objects corresponding to the close-up box, creating a corresponding rectangular region for the close-up box, creating a virtual object centered on a center point of the rectangular region, updating a selection position of the close-up box in the video stream data based on the virtual object; when there is one principal object corresponding to the close-up box, updating a selection position of the close-up box in the video stream data centered on the principal object.

Step 5160, displaying the close-up picture of respective updated close-up boxes in the video stream data.

After updating the close-up box recognition result, step 510 is executed until the end of this video exchange or the display of close-up pictures.

Through the above example, it is possible to avoid the repeated appearance of a head object in multiple close-up pictures as much as possible, and the layout of the head object in each close-up picture is more reasonable, improving the user viewing experience of the close-up picture.

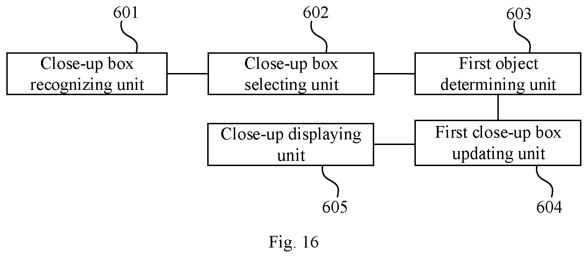

According to an embodiment of the present disclosure, an apparatus for determining close-up picture is further provided. Fig. 16 is a schematic diagram of a structure of an apparatus for determining close-up picture according to one embodiment of the present disclosure. Referring to Fig. 16, the apparatus for determining close-up picture includes a close-up box recognizing unit 601, a close-up box selecting unit 602, a first object determining unit 603, a first close-up box updating unit 604, and a close-up displaying unit 605.

The close-up box recognizing unit 601 is configured to recognize a close-up box to which each head object in the current frame of video stream data belongs, where each close-up box corresponds to at least one principal object, and the principal object is determined as the head object that has been enclosed by the corresponding close-up box; the close-up box selecting unit 602 is configured to select a close-up box from the close-up boxes as the current close-up box; the first object determining unit 603 is configured to, when there is a second head object capable of being added to the current close-up box, determine the second head object as the principal object corresponding to the current close-up box, and delete the close-up box constructed for the second head object; the first close-up box updating unit 604 is configured to select a second close-up box from the close-up boxes to take it as the current close-up box, and return to perform an operation of, when there is a second head object capable of being added to the current close-up box, determining the second head object as the principal object corresponding to the current close-up box, and deleting the close-up box constructed for the second head object until all current close-up boxes are traversed; the close-up displaying unit 605 is configured to display the close-up picture selected by each close-up box in the video stream data.

On the basis of the above embodiment, the first object determining unit 603 includes a change judging subunit, configured to judge whether the principal object in the current close-up box has changed; a first object selecting subunit, configured to if the principal object in the current close-up box changes, then select the principal object with the largest area in the current close-up box as the current principal object, and delete the current close-up box; a close-up reconstruction subunit, configured to reconstruct a close-up box for the current principal object as the current close-up box; and a second object determining subunit, configured to find a second head object capable of being added to the current close-up box, determine the second head object as the principal object corresponding to the current close-up box, and delete the close-up box constructed for the second head object.

On the basis of the above embodiment, the second object determining subunit includes: a first stability-box constructing grandchild-unit, configured to construct a stable box centered on the current principal object; a first stability-box moving grandchild-unit, configured to move the stable box and find a second head object capable of being added to the current close-up box during the movement, where the second head object capable of being added to the current close-up box intersects with the stable box at corresponding time during the movement; a third object determining grandchild-unit, configured to determine the found second head object as the principal objects corresponding to the current close-up box, and delete the close-up box constructed for the second head object; a first object updating grandchild-unit, configured to select the principal object with the largest area in the current close-up box to take it as the current principal object, and return to perform an operation of constructing a stable box centered on the current principal object until no other head object capable of being added to the current close-up box is found.

On the basis of the above embodiment, the apparatus for determining close-up picture further includes: an object existence determining unit, configured to after judging whether the principal object in the current close-up box has changed, if the principal object in the current close-up box has not changed, determine whether there is a second head object in the current close-up box; a fourth object determining unit, configured to if there is a second head object, then determine the second head object as the principal object corresponding to the current close-up box, and delete the close-up box constructed for the second head object, and execute an operation of selecting a second close-up box from the close-up boxes to take it as the current close-up box; and a second close-up box updating unit, configured to, if there is no other head object, then execute an operation of selecting another close-up box from the close-up boxes and taking it as the current close-up box.

On the basis of the above embodiment, the fourth object determining unit includes: a second object selecting subunit, configured to if there is a second head object, then select the principal object with the largest area in the current close-up box and take it as the current principal object; a second stability-box constructing grandchild-unit, configured to construct a stable box centered on the current principal object; a second stability-box moving subunit, configured to move the stable box and find a second head object capable of being added to the current close-up box during the movement, where the second head object capable of being added to the current close-up box intersect with the stable box at corresponding time during the movement; a fifth object determining subunit, configured to determine the found second head object as the principal object corresponding to the current close-up box, and delete the close-up box constructed for the second head object; and a second object updating subunit, configured to select the principal object with the largest area in the current close-up box and update as the current principal object, and return to perform an operation of constructing a stable box centered on the current principal object, until no other head object capable of being added to the current close-up box is found.

On the basis of the above embodiment, during the movement of the stable box, the corresponding current principal object remains its position unchanged and always stays in the stable box.

On the basis of the above embodiment, a size of the stable box is determined by a display size of the corresponding current principal object in the current frame picture.

On the basis of the above embodiment, both the first stability-box moving grandchild-unit and the second stability-box moving subunit are specifically configured to: move the stable box and finding a second head object, located within the current close-up box, that intersects with the stable box during the movement; determine the smallest rectangular region containing the found second head object and the principal object in the current close-up box; and when the width and height of the smallest rectangular region are both less than the width and height of the stable box, determining that the found second head object is capable of being added to the current close-up box.

On the basis of the above embodiment, the change judging subunit is specifically configured to: judge whether the number of principal objects in the current close-up box has changed; or, judge whether the area change range of the principal object with the largest area in the current close-up box exceeds an area threshold; or, judge whether there is a principal object in the current close-up box exceeding the stable box created for the principal object with the largest area.

On the basis of the above embodiment, the close-up displaying unit 605 includes: a first selection position updating subunit, configured to when there are multiple principal objects corresponding to the close-up box, create a corresponding rectangular region for the close-up box, where the rectangular region is the smallest rectangular region containing all the principal objects within the corresponding close-up box, create a virtual object centered on a center point of the rectangular region, where the area of the virtual object is equal to the area of the principal object with the largest area within the corresponding close-up box, update a selection position of the close-up box in the video stream data based on the virtual object, so that the updated close-up box is centered on the virtual object; a second selection position updating subunit, configured to when the number of the principal object corresponding to the close-up box is one, update the selection position of the close-up box in the video stream data centered on the principal object; and a close-up picture displaying subunit, configured to display the selected close-up picture of respective updated close-up boxes in the video stream data.

On the basis of the above embodiment, the close-up box recognizing unit 601 includes: a result acquiring subunit, configured to acquire a latest close-up box recognition result obtained for the video stream data; and a close-up recognizing subunit, configured to determine the close-up box to which each head object in the current frame of the video stream data belongs based on the close-up box recognition result. Correspondingly, the apparatus for determining close-up picture further includes a result updating unit, configured to update the close-up box recognition result after all the current close-up boxes are traversed.

The above-mentioned apparatus for determining close-up picture may be used to execute any of the methods for determining close-up picture according to the aforementioned embodiments, and has corresponding functions and beneficial effects.

It is worth noting that in the embodiments of the apparatus for determining close-up picture mentioned above, the various units and modules included are only divided based on functional logic, but are not limited to the above division, as long as they can achieve the corresponding functions; in addition, the specific names of each functional unit are only for ease of distinction and are not intended to limit the scope of protection of the present disclosure.

According to one embodiment of the present disclosure, a device for determining close-up picture is provided. Referring to Fig. 5, the device for determining close-up picture includes a processor 21, a memory 22, and a display screen 23. The display screen 23 is used to display close-up pictures; the memory 22 is used to store one or more programs; when the one or more programs are executed by the one or more processors 21, the one or more processors are caused to implement any of the methods for determining close-up picture according to the aforementioned embodiments. The relevant content of each component may refer to the previous description.

The above-mentioned device for determining close-up picture includes an apparatus for determining close-up picture, which may be used to execute any of the methods for determining close-up picture, and has corresponding functions and beneficial effects. Specific details not currently described may refer to the relevant description of the aforementioned method for determining close-up picture.

In addition, according to the embodiments of the present disclosure, a storage medium is further provided, containing computer executable instructions, and the computer executable instructions, when executed by a computer processor, are used to perform relevant operations in the method for determining close-up picture according to any embodiment of the present disclosure, and have corresponding functions and beneficial effects.

Those skilled in the art should understand that the embodiments of the present disclosure may be provided as methods, systems, or computer program products.

Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk storage, CD-ROM, optical storage, etc.) containing computer-usable program codes. The present disclosure is described with reference to flowcharts and/or block diagrams of methods, devices (systems), and computer program products according to embodiments of the present disclosure. It should be understood that each process and/or block in the flowchart and/or block diagram, and a combination of the processes and/or blocks in the flowchart and/or block diagram may be implemented by computer program instructions. These computer program instructions may be provided to a processor of a general-purpose computer, a special-purpose computer, an embedded processor or other programmable data processing device to produce a machine, so that the instructions executed by the processor of the computer or other programmable data processing device produce a device for implementing the functions specified in one or more processes in the flowchart and/or one or more blocks in the block diagram. These computer program instructions may also be stored in a computer-readable memory that may direct a computer or other programmable data processing device to work in a specific manner, so that the instructions stored in the computer-readable memory produce a manufactured product including an instruction device that implements the functions specified in one or more processes in the flowchart and/or one or more boxes in the block diagram. These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

Computer-readable media include both permanent and non-permanent, removable and non-removable media that may be implemented by any method or technology for storage of information. The information may be computer-readable instructions, data structures, program modules or other data. Examples of computer storage media include, but are not limited to, phase-change random access memory (PRAM), static random access memory (SRAM), dynamic random access memory (DRAM), other types of random access memory (RAM), read-only memory (ROM), electrically erasable programmable read-only memory (EEPROM), flash memory or other memory technology, compact disk-read-only memory (CD-ROM), digital versatile disk (DVD) or other optical storage, magnetic cassettes, magnetic tape, magnetic disk storage or other magnetic storage devices, or any other non-transmission medium that may be used to store information that may be accessed by a computing device. Based on the definition in this description, computer-readable media does not include temporary computer-readable media (transitory media), such as modulated data signals and carrier waves.

It should also be noted that the terms "comprises," "includes," or any other variations thereof are intended to cover non-exclusive inclusion, such that a process, method, commodity, or apparatus that includes a series of elements includes not only those elements, but also other elements not explicitly listed, or also includes elements inherent to such process, method, commodity, or apparatus. In the absence of more constraints, an element defined by the phrase "comprises a ..." does not exclude the existence of additional identical elements in the process, method, product or apparatus comprising the element. It should be noted that the above are only preferred embodiments and technical principles used in the present disclosure. Those skilled in the art will appreciate that the present disclosure is not limited to the specific embodiments herein, and that various obvious changes, rearrangements, and substitutions may be made by those skilled in the art without departing from the scope of protection of the present disclosure. Therefore, although the present disclosure has been described in detail through the above embodiments, the present disclosure is not limited to the above embodiments, and may include more other equivalent embodiments without departing from the concept of the present disclosure. The scope of the present disclosure is determined by the scope of the attached claims.

## Claims

1. A method for determining method for determining close-up picture, comprising:
recognizing a close-up box to which each head object in the current frame of video stream data belongs, wherein each close-up box corresponds to at least one principal object, and the principal object is determined as the head object that has been enclosed by the corresponding close-up box;
selecting a close-up box from the close-up boxes as the current close-up box;
when there is a second head object capable of being added to the current close-up box, determining the second head object as the principal object corresponding to the current close-up box, and deleting the close-up box constructed for the second head object;
selecting a second close-up box from the close-up boxes for updating the current close-up box as the second close-up box, and returning to perform an operation of when there is a second head object capable of being added to the current close-up box, determining the second head object as the principal object corresponding to the current close-up box, and deleting the close-up box constructed for the second head object until all current close-up boxes are traversed; and
displaying the close-up picture selected by each close-up box in the video stream data.

2. The method for determining close-up picture of claim 1, wherein when there is a second head object capable of being added to the current close-up box, determining the second head object as the principal object corresponding to the current close-up box, and deleting the close-up box constructed for the second head object comprises:
judging whether the principal object in the current close-up box has changed;
if the principal object in the current close-up box has changed, then selecting the principal object with the largest area in the current close-up box as the current principal object, and deleting the current close-up box;
reconstructing a close-up box for the current principal object as the current close-up box; and
finding a second head object capable of being added to the current close-up box, determining the second head object as the principal object corresponding to the current close-up box, and deleting the close-up box constructed for the second head object.

3. The method for determining close-up picture of claim 2, wherein the finding the second head object capable of being added to the current close-up box, determining the second head object as the principal object corresponding to the current close-up box, and deleting the close-up box constructed for the second head object comprises:
constructing a stable box centered on the current principal object;
moving the stable box and finding a second head object capable of being added to the current close-up box during the movement, wherein the second head object capable of being added to the current close-up box intersects with the stable box at corresponding time during the movement;
determining the found second head object as the principal objects corresponding to the current close-up box, and deleting the close-up box constructed for the second head object; and
selecting the principal object with the largest area in the current close-up box to take it as the current principal object, and returning to perform an operation of constructing a stable box centered on the current principal object until no other head object capable of being added to the current close-up box is found.

4. The method for determining close-up picture of claim 2, wherein after judging whether the principal object in the current close-up box has changed, comprising:
if the principal object in the current close-up box has not changed, then determining whether there is a second head object in the current close-up box;
if there is a second head object, then determining the second head object as the principal object corresponding to the current close-up box, and deleting the close-up box constructed for the second head object, and executing the operation of selecting a second close-up box from the close-up boxes to update the current close-up box as the second close-up box; and
if there is no other head object, then executing the operation of selecting a second close-up box from the close-up boxes and the current close-up box As the second close-up box.

5. The method for determining close-up picture of claim 4, wherein if there is a second head object, then determining the second head object as the principal object corresponding to the current close-up box, and deleting the close-up box constructed for the second head object comprises:
if there is a second head object, then selecting the principal object with the largest area in the current close-up box and taking it as the current principal object;
constructing a stable box centered on the current principal object;
moving the stable box and finding a second head object capable of being added to the current close-up box during the movement, wherein the second head object capable of being added to the current close-up box intersect with the stable box at corresponding time during the movement;
determining the found second head object as the principal object corresponding to the current close-up box, and deleting the close-up box constructed for the second head object; and
selecting the principal object with the largest area in the current close-up box and taking it as the current principal object, and returning to execute the operation of constructing a stable box centered on the current principal object, until no other head object capable of being added to the current close-up box is found.

6. The method for determining close-up picture of claim 3 or 5, wherein during the movement of the stable box, the corresponding current principal object remains its position unchanged and always stays in the stable box.

7. The method for determining close-up picture of claim 3 or 5, wherein a size of the stable box is determined by a display size of the corresponding current principal object in the current frame picture.

8. The method for determining close-up picture of claim 3 or 5, wherein the moving the stable box and finding a second head object capable of being added to the current close-up box during the movement comprises:
moving the stable box and finding a second head object located within the current close-up box that intersects with the stable box during the movement;
determining the smallest rectangular region containing the found second head object and the principal object in the current close-up box; and
when the width and height of the smallest rectangular region are both less than the width and height of the stable box, determining that the found second head object is capable of being added to the current close-up box.

9. The method for determining close-up picture of claim 2, wherein the judging whether the principal object in the current close-up box has changed comprises:
judging whether the number of principal objects in the current close-up box has changed; or
judging whether the area change range of the principal object with the largest area in the current close-up box exceeds an area threshold; or
judging whether there is a principal object in the current close-up box exceeding the stable box created for the principal object with the largest area.

10. The method for determining close-up picture of claim 1, wherein the displaying the close-up picture selected by each close-up box in the video stream data comprises:
when there are multiple principal objects corresponding to the close-up box, creating a corresponding rectangular region for the close-up box, wherein the rectangular region is the smallest rectangular region containing all the principal objects within the corresponding close-up box, creating a virtual object centered on a center point of the rectangular region, wherein the area of the virtual object is equal to the area of the principal object with the largest area within the corresponding close-up box, updating a selection position of the close-up box in the video stream data based on the virtual object, so that the updated close-up box is centered on the virtual object;
when the number of the principal object corresponding to the close-up box is one, updating the selection position of the close-up box in the video stream data centered on the principal object; and
displaying the selected close-up picture of respective updated close-up boxes in the video stream data.

11. The method for determining close-up picture of claim 1, wherein the recognizing a close-up box to which each head object in the current frame of video stream data belongs comprises:
acquiring a latest close-up box recognition result obtained for the video stream data; and
determining the close-up box to which each head object in the current frame of the video stream data belongs based on the close-up box recognition result;
after all the current close-up boxes are traversed, the method further comprising:
updating the close-up box recognition result.

12. An apparatus for determining a close-up picture, comprising:
a close-up box recognizing unit configured to recognize a close-up box to which each head object in the current frame of video stream data belongs, wherein each close-up box corresponds to at least one principal object, and the principal object is determined as the head object that has been enclosed by the corresponding close-up box;
a close-up box selecting unit configured to select a close-up box from the close-up boxes as the current close-up box;
a first object determining unit configured to, when there is a second head object capable of being added to the current close-up box, determine the second head object as the principal object corresponding to the current close-up box, and delete the close-up box constructed for the second head object;
a first close-up box updating unit configured to select a second close-up box from the close-up boxes to update the current close-up box as the selected second close-up box, and return to perform an operation of, when there is a second head object capable of being added to the current close-up box, determining the second head object as the principal object corresponding to the current close-up box, and deleting the close-up box constructed for the second head object until all current close-up boxes are traversed; and
a close-up displaying unit configured to display the close-up picture selected by each close-up box in the video stream data.

13. A device for determining close-up picture is further provided, comprising:
one or more processors;
a display screen configured to display close-up pictures;
a memory configured to store one or more programs;
wherein the one or more programs, when executed by the one or more processors, cause the one or more processors to perform any one of the methods for determining close-up picture of claim 1-11.

14. A computer-readable storage medium, on which a computer program is stored, wherein the program, when executed, performs any one of the methods for determining close-up picture of claim 1-11.
